# EUROPEAN PATENT APPLICATION

(11) **EP 4 668 684 A1**
(43) Date of publication of application: **24.12.2025**
(21) Application number: 24777921.8
(22) Date of filing: 22.03.2024
(51) Int. Cl.: H04L 25/03

(54) **ENCODING METHOD, DECODING METHOD, ENCODING APPARATUS AND DECODING APPARATUS**

(30) Priority: 31.03.2023 CN 202310377873
(71) Applicant: Huawei Technologies Co., Ltd., Shenzhen, Guangdong 518129 (CN)
(72) Inventor: TIAN, Kun, Shenzhen, Guangdong 518129 (CN); CHEN, Yun, Shenzhen, Guangdong 518129 (CN); HUANG, Heming, Shenzhen, Guangdong 518129 (CN); WANG, Yaoyuan, Shenzhen, Guangdong 518129 (CN); ZHANG, Ziyang, Shenzhen, Guangdong 518129 (CN)
(74) Representative: Pfenning, Meinig & Partner mbB
(86) International application number: PCT/CN2024/083339
(87) International publication number: WO 2024/199132

(57) **Abstract**

Embodiments of this application provide an encoding method, a decoding method, an encoding apparatus, and a decoding apparatus, and relate to the field of chip technologies, to resolve a problem of pulse signal transmission in a high-throughput and low-bandwidth scenario. A specific solution is: obtaining a first pulse signal; encoding the first pulse signal to obtain a hidden variable; quantizing the hidden variable, and performing index encoding on a quantized hidden variable to obtain a vector index of the first pulse signal, where the vector index is used by a decoding apparatus to reconstruct the first pulse signal with reference to the hidden variable; and sending the vector index to the decoding apparatus. Embodiments of this application are applied to a process in which the encoding apparatus transmits a pulse signal to the decoding apparatus.

## Description

This application claims priority to Chinese Patent Application No. 202310377873.3, filed with the China National Intellectual Property Administration on March 31, 2023 and entitled "ENCODING METHOD, DECODING METHOD, ENCODING APPARATUS, AND DECODING APPARATUS", which is incorporated herein by reference in its entirety.

### TECHNICAL FIELD

Embodiments of this application relate to the field of chip technologies, and in particular, to an encoding method, a decoding method, an encoding apparatus, and a decoding apparatus.

### BACKGROUND

Brain-machine interface technologies may be classified into intrusive brain-machine interface technologies and non-intrusive brain-machine interface technologies based on motor implantation. In intrusive signals, pulse signals (spike) are most widely used by virtue of their characteristics of high spatial-temporal precision, a weak amplitude, sparse spatial-temporal firing, and the like. A waveform of the pulse signal is usually 1 ms to 2 ms, where abundant physiological information and pathological information are included, and have great significance to scientific and clinical research.

However, an intrusive brain-machine interface chip has a very high requirement on power consumption and an area. With the development of the brain-machine interface technologies towards a high throughput, high precision, a high sampling rate, wireless transmission, wireless charging, and the like, pulse signals of 10G bits per second (bits per second, bps) to 100G bits per second can be generated on a thousand-level channel, and a large quantity of pulse signals cannot be transmitted over a limited wireless bandwidth (<5 Mbps). Therefore, this imposes great challenges on precision, real-time performance, and storage requirements for pulse signal processing. In particular, there is an urgent need to resolve a problem of pulse signal transmission in a high-throughput and low-bandwidth scenario.

### SUMMARY

Embodiments of this application provide an encoding method, a decoding method, an encoding apparatus, and a decoding apparatus, to reduce an amount of data transmitted by a pulse signal in a high-throughput and low-bandwidth scenario.

To achieve the foregoing objectives, the following technical solutions are used in embodiments of this application.

According to a first aspect, an embodiment of this application provides an encoding method. The method includes: obtaining a first pulse signal; encoding the first pulse signal to obtain a hidden variable; quantizing the hidden variable, and performing index encoding on a quantized hidden variable to obtain a vector index of the first pulse signal, where the vector index is used by a decoding apparatus to reconstruct the first pulse signal with reference to the hidden variable; and sending the vector index to the decoding apparatus.

Therefore, in the encoding method provided in this embodiment of this application, encoding, quantization, and index encoding are performed on the first pulse signal to obtain the vector index of the first pulse signal, and the vector index is sent to the decoding apparatus. Compared with the conventional technology in which the first pulse signal is directly transmitted, this application reduces an amount of data to be transmitted to the decoding apparatus by performing encoding and quantization on the first pulse signal. In addition, the vector index is transmitted to the decoding apparatus, so that the amount of data to be transmitted to the decoding apparatus can be further reduced. This resolves a problem of pulse signal transmission in a high-throughput and low-bandwidth scenario.

In a possible design, before the sending the vector index to the decoding apparatus, the method further includes: performing lossless encoding on the vector index.

In this design, an encoding apparatus may directly transmit an original vector index to the decoding apparatus, or may perform entropy encoding on the vector index, to further reduce an amount of data that needs to be transmitted by the encoding apparatus to the decoding apparatus.

In a possible design, the first pulse signal is an electroencephalogram signal.

In this design, the first pulse signal may be an intrusive electroencephalogram signal collected through an intrusive brain-machine interface chip, and an electroencephalogram signal is collected through a built-in electrode, so that accuracy of collecting the electroencephalogram signal can be improved.

In a possible design, the encoding the first pulse signal to obtain a hidden variable includes: compressing the first pulse signal into hidden space based on a convolutional neural network, to obtain the hidden variable.

In this design, the encoding apparatus may perform feature extraction on the first pulse signal based on a convolutional layer in the convolutional neural network, to obtain continuous hidden variables, and a quantity of parameters may be further reduced.

In a possible design, the quantizing the hidden variable includes: quantizing the hidden variable based on a competitive learning mechanism.

In this design, a process in which the encoding apparatus quantizes the hidden variable may be understood as a discrete process, and a plurality of discrete quantized hidden variables may be obtained.

In a possible design, before the obtaining a first pulse signal, the method further includes: obtaining the first pulse signal based on a comparison result between spectral energy corresponding to a second pulse signal and a preset threshold.

In this design, the spectral energy corresponding to the second pulse signal is compared with the preset threshold, so that noise in the second pulse signal can be removed.

According to a second aspect, an embodiment of this application provides a decoding method. The method includes: receiving a vector index of a first pulse signal; determining a quantized hidden variable corresponding to the vector index; and reconstructing the quantized hidden variable to obtain a reconstructed pulse signal.

Therefore, after the vector index is received, the vector index is combined with a corresponding hidden variable to determine the hidden variable corresponding to the vector index, and then pulse waveform reconstruction is performed based on the hidden variable to obtain a reconstructed pulse signal, to complete pulse signal transmission. In addition, in a training process of an original pulse waveform, motion artifacts have been removed, so that the reconstructed pulse signal does not include the motion artifacts.

In a possible design, after the receiving a vector index of a first pulse signal, the method further includes: performing lossless decoding on the vector index.

In this design, if the vector index received by the decoding apparatus is a vector index used by the encoding apparatus to perform lossless encoding, lossless decoding needs to be performed on the vector index. Information may be not lost if the vector index is encoded in the lossless encoding manner, and an amount of data that needs to be transmitted by the encoding apparatus to the decoding apparatus may be further reduced.

In a possible design, the reconstructing the quantized hidden variable to obtain a reconstructed pulse signal includes: calculating, based on a convolutional neural network, a loss function corresponding to the quantized hidden variable; and reconstructing the quantized hidden variable based on the loss function to obtain a reconstructed pulse signal.

In this design, the quantized hidden variable is reconstructed based on the loss function. This may reduce a reconstruction error of the reconstructed pulse signal.

In a possible design, the first pulse signal and the reconstructed pulse signal are electroencephalogram signals.

In this design, the first pulse signal is an intrusive electroencephalogram signal collected by an intrusive brain-machine interface chip, and the reconstructed pulse signal is a reconstructed first pulse signal that can be analyzed and processed.

According to a third aspect, an embodiment of this application provides an encoding apparatus. The encoding apparatus includes an encoder and a compressed vector discretization circuit. The encoder is configured to obtain a first pulse signal. The encoder is further configured to encode the first pulse signal to obtain a hidden variable. The compressed vector discretization circuit is configured to: quantize the hidden variable, and perform index encoding on a quantized hidden variable to obtain a vector index of the first pulse signal, where the vector index is used by a decoding apparatus to reconstruct the first pulse signal with reference to the hidden variable. The compressed vector discretization circuit is further configured to send the vector index to the decoding apparatus.

For beneficial effects of the third aspect, refer to the descriptions of the first aspect.

In a possible design, the encoder is further configured to perform lossless encoding on the vector index.

In a possible design, the first pulse signal is an electroencephalogram signal.

In a possible design, the encoder is specifically configured to compress the first pulse signal into hidden space based on a convolutional neural network, to obtain the hidden variable.

In a possible design, the compressed vector discretization circuit is specifically configured to quantize the hidden variable based on a competitive learning mechanism.

In a possible design, the encoding apparatus further includes a signal detection circuit, and the signal detection circuit is configured to obtain the first pulse signal based on a comparison result between spectral energy corresponding to a second pulse signal and a preset threshold.

According to a fourth aspect, an embodiment of this application provides a decoding apparatus. The decoding apparatus includes a decoder and a reconstruction circuit. The decoder is configured to receive a vector index of a first pulse signal. The decoder is further configured to determine a quantized hidden variable corresponding to the vector index. The reconstruction circuit is configured to reconstruct the quantized hidden variable to obtain a reconstructed pulse signal.

For beneficial effects of the fourth aspect, refer to the descriptions of the second aspect.

In a possible design, the decoder is further configured to perform lossless decoding on the vector index.

In a possible design, the reconstruction circuit is specifically configured to: calculate, based on a convolutional neural network, a loss function corresponding to the quantized hidden variable; and reconstruct the quantized hidden variable based on the loss function to obtain a reconstructed pulse signal.

In a possible design, the first pulse signal and the reconstructed pulse signal are electroencephalogram signals.

According to a fifth aspect, an embodiment of this application further provides an encoding apparatus, including a processor and a memory. The memory stores computer instructions. After executing the computer instructions, the processor performs the encoding method according to the first aspect.

According to a sixth aspect, an embodiment of this application further provides a decoding apparatus, including a processor and a memory. The memory stores computer instructions. After executing the computer instructions, the processor performs the decoding method according to the second aspect.

According to a seventh aspect, an embodiment of this application provides an electronic device, including an antenna, one or more processors, and one or more memories. The one or more memories are coupled to the one or more processors. The one or more memories are configured to store computer program code. The computer program code includes computer instructions. When the one or more processors execute the computer instructions, the electronic device is enabled to perform the encoding method or the decoding method according to any one of the foregoing aspects or the possible implementations.

According to an eighth aspect, an embodiment of this application provides a computer-readable storage medium, including computer instructions. When the computer instructions are run on an electronic device, the electronic device is enabled to perform the encoding method or the decoding method according to any one of the foregoing aspects or the possible implementations.

According to a ninth aspect, an embodiment of this application provides a computer program product. When the computer program product runs on a computer or a processor, the computer or the processor is enabled to perform the encoding method or the decoding method according to any one of the foregoing aspects or the possible implementations.

It may be understood that any encoding apparatus, decoding apparatus, computer-readable storage medium, computer program product, or the like provided above may be used in the corresponding method provided above. Therefore, for beneficial effects that can be achieved by the encoding apparatus, the decoding apparatus, the computer-readable storage medium, the computer program product, or the like, refer to the beneficial effects in the corresponding method. Details are not described herein again.

These aspects or other aspects in this application are more concise and comprehensible in the following descriptions.

### BRIEF DESCRIPTION OF DRAWINGS

FIG. 1 is a diagram of a system or a device to which an encoding apparatus is applied according to an embodiment of this application;
FIG. 2 is a diagram of a structure of a SoC according to an embodiment of this application;
FIG. 3 is a flowchart of an encoding method according to an embodiment of this application;
FIG. 4 is a diagram of waveforms of a plurality of quantized hidden variables according to an embodiment of this application;
FIG. 5 is a diagram of modules of an encoding apparatus according to an embodiment of this application;
FIG. 6 is a flowchart of a decoding method according to an embodiment of this application;
FIG. 7 is a diagram of comparison between a first pulse signal and a reconstructed pulse signal according to an embodiment of this application;
FIG. 8 is a diagram of an encoding procedure and a decoding procedure according to an embodiment of this application;
FIG. 9 is a diagram of an architecture of hidden variable quantization according to an embodiment of this application;
FIG. 10 is a diagram of a motion artifact noise reduction effect according to an embodiment of this application;
FIG. 11 is a diagram of composition of an encoding apparatus according to an embodiment of this application; and
FIG. 12 is a diagram of composition of a decoding apparatus according to an embodiment of this application.

### DESCRIPTION OF EMBODIMENTS

For ease of understanding, some concepts related to embodiments of this application are described as examples for reference. Details are as follows:
Brain-machine interface technologies may be classified into intrusive brain-machine interface technologies and non-intrusive brain-machine interface technologies based on electrode implantation. Intrusive collection information (for example, a pulse signal, a local field potential (local field potential, LFP), and an electrocorticogram (electrocorticogram, ECoG)) has a high signal-to-noise ratio, but is harmful to human bodies to some extent. Currently, the intrusive collection information mainly relates to the medical rehabilitation field. A non-intrusive signal (for example, a non-intrusive electroencephalogram (electroencephalogram, EEG)) has a low signal-to-noise ratio, and only needs to be externally worn by users. The non-intrusive signal is mainly applied to scenarios including physiological state evaluation and control (for example, attention, sleep, and stress detection), human-machine interaction (for example, disability assistance, a virtual reality (virtual reality, VR) device, and an augmented reality (augmented reality, AR) device), sports health, and the like.

A convolutional neural network (convolutional neural network, CNN) is a type of a feedforward neural network (feedforward neural network, FNN) involving convolutional calculation with a deep structure, and the CNN is one of representative algorithms of deep learning (deep learning).

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

To process a pulse signal of an intrusive brain-machine interface, a solution for processing an on-chip signal of the intrusive brain-machine interface is provided in the conventional technology. In this solution, the pulse signal is finally compressed into a pulse firing rate per unit time by performing analog-to-digital conversion, filtering, and waveform key point detection and matching on the pulse signal, to implement on-chip electroencephalogram signal processing on a thousand-level channel. However, in this solution, a high pulse firing rate yields increase in false negatives, and a pulse waveform signal cannot be output in a high-throughput and low-bandwidth scenario.

In addition, the conventional technology further provides a signal compression technology based on a hidden variable model. In this technology, hidden variable waveforms such as principal component analysis (principal component analysis, PCA), independent component analysis (independent component analysis, ICA), and factor analysis (factor analysis, FA) are used for dimensionality reduction of an original pulse signal to hidden space, and hidden variable decomposition is performed in the hidden space, to compress an original pulse waveform signal. However, the hidden variable model is a dimension reduction algorithm rather than a compression algorithm, and a compression ratio is limited, making it difficult to meet a wireless transmission bandwidth requirement of the brain-machine interface chip. In addition, a hidden variable of the pulse signal does not meet orthogonality, independence, or Gaussian distribution assumptions of such methods including the principal component analysis, the independent component analysis, and the factor analysis, and therefore the hidden variable cannot effectively represent the pulse signal, resulting in low reconstruction precision.

In addition, a test environment under an experimental condition is an ideal environment of an existing brain-machine interface technology, and typically a tested person needs to be in a stationary state. Therefore, motion artifacts caused by muscle movements, electrode shift, and the like in a motion state cannot be effectively detected and noise reduction processing cannot be performed, affecting performance of a decoding apparatus and popularization and application in a real scenario. Therefore, an empirical mode decomposition (empirical mode decomposition, EMD) technology is provided in the conventional technology. In this technology, for a non-stationary time sequence signal, for example, an electroencephalogram signal, the empirical mode decomposition technology can implement adaptive decomposition into an intrinsic mode function (intrinsic mode function, IMF) based on an electroencephalogram time sequence and a frequency domain rule without analysis and research in advance. Therefore, the empirical mode decomposition technology may be used to perform detection and noise reduction processing on the motion artifacts caused by the muscle movement and the like in the motion state. However, this technology is only for a single channel and is more applicable to continuous electroencephalogram signals such as an electrocorticogram and a non-intrusive electroencephalogram or a time sequence signal having a definite periodic transport rule, but has poor noise reduction effect on motion artifacts of discrete and sparse signals such as a pulse signal.

Therefore, an embodiment of this application provides an encoding method. In the encoding method, a vector index of a first pulse signal is sent to a decoding apparatus. Therefore, compared with the conventional technology in which the first pulse signal is directly sent to the decoding apparatus, this application reduces an amount of data to be transmitted to the decoding apparatus by performing encoding and quantization on the first pulse signal. In addition, the vector index is transmitted to the decoding apparatus, so that the amount of data to be transmitted to the decoding apparatus can be further reduced. This resolves a problem of pulse signal transmission in a high-throughput and low-bandwidth scenario.

In correspondence to the encoding method, an embodiment of this application further provides a decoding method. In the decoding method, after receiving a vector index sent by an encoding apparatus, a decoding apparatus end combines the vector index with a corresponding hidden vector to determine a hidden variable corresponding to the vector index, and then performs pulse waveform reconstruction based on the hidden variable to obtain a reconstructed pulse signal, to complete pulse signal transmission. In addition, in a training process of an original pulse waveform, motion artifacts have been removed, so that the reconstructed pulse signal does not include the motion artifacts.

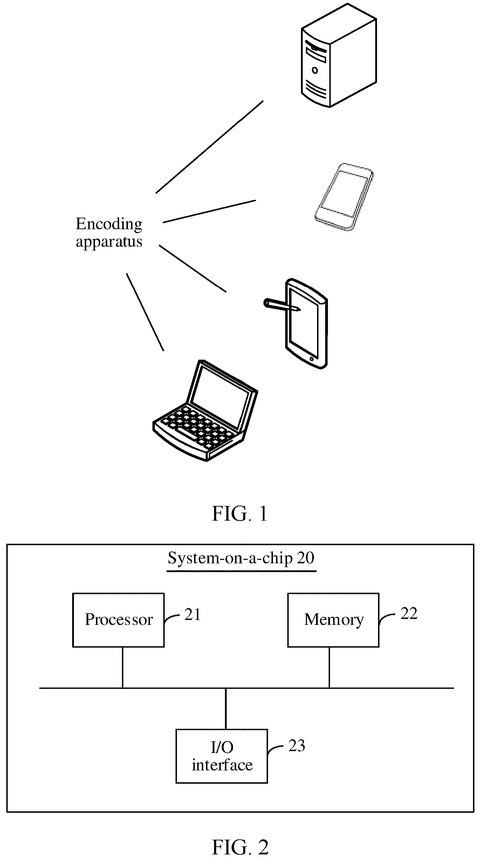

The foregoing encoding method and decoding method may be applied to different systems or devices. For example, the encoding method may be applied to an encoding apparatus, and the decoding method may be applied to a decoding apparatus. The encoding apparatus may be a terminal device shown in FIG. 1, for example, a mobile phone terminal, a tablet computer, a notebook computer, an augmented reality device, a virtual reality device, or a vehicle-mounted terminal, or may be a server or the like. In addition, the decoding apparatus may also be a terminal device, for example, a mobile phone terminal, a tablet computer, a notebook computer, AR, VR, or a vehicle-mounted terminal. An input/output (input/output, I/O) interface may be disposed for the encoding apparatus or the decoding apparatus, and is configured to exchange data with an external device. For example, a user may input data to the input/output interface through a client device. In embodiments of this application, the input data may include a first pulse signal. The data may be data collected by the encoding apparatus using a data collection device, may be data in a database of the encoding apparatus, or may be data from the client device.

In some embodiments, the encoding apparatus for implementing the encoding method and the decoding apparatus for implementing the decoding method that are provided in embodiments of this application may be a chip, and the chip is a system-on-a-chip (system-on-a-chip, SoC) 20. As shown in FIG. 2, the system-on-a-chip 20 may include a processor 21 (where the processor may be a single-core processor or a multi-core processor), a memory 22, an I/O interface 23, and the like. After loading data and an application program in the memory, the processor may process the data, for example, perform encoding processing and decoding processing in this application. For example, when the data is a first pulse signal, the first pulse signal may be encoded and quantized to obtain a quantized hidden variable, and a vector index of the first pulse signal is obtained based on the quantized hidden variable.

The encoding method and the decoding method provided in embodiments of this application may be applied to processing of an intrusive electroencephalogram signal. The intrusive electroencephalogram signal may be processed using an intrusive brain-machine interface dedicated chip, general-purpose chips such as a central processing unit (central processing unit, CPU), a graphics processing unit (graphics processing unit, GPU), and a neural network process unit (neural network processing unit, NPU), or brain-machine interface software.

In addition, the encoding method and the decoding method provided in embodiments of this application are mainly applied to a field in which an intrusive brain-machine interface chip is required to collect a signal, and used in scenarios such as medical health (for example, motion control, sensory reconstruction, emotion recognition, and disease detection) and scientific research.

The method is applied to the foregoing apparatus or device. The following describes the encoding method provided in embodiments of this application.

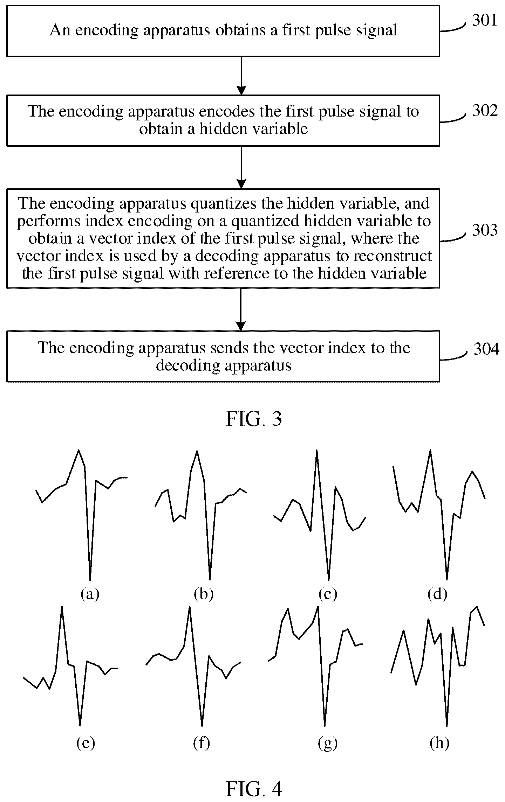

An embodiment of this application provides an encoding method. FIG. 3 is a flowchart of an encoding method according to an embodiment of this application. The encoding method includes the following procedure.

Step 301: An encoding apparatus obtains a first pulse signal.

For example, the first pulse signal is a signal continuously sent based on a specific voltage amplitude and a specific time interval. A time interval between pulse signals is a period, and a quantity of pulses generated per unit time (for example, 1s) is referred to as a frequency.

It may be understood that the first pulse signal is a digital signal, and may be understood as a binary stream. In an instance, the first pulse signal is a signal with a high throughput (a thousand-level channel), high precision (12 bits to 16 bits), and a high sampling rate (greater than 20 kHz).

For example, first pulse signals may be arranged based on a channel quantity and a waveform length, where the channel quantity is a quantity of channels read by the encoding apparatus at a time. In an example, the quantity of channels read at a time may be 8, and the waveform length may be 100. In this way, encoding efficiency of the encoding apparatus can be improved, and subsequent processing may be performed with reference to correlations of first pulse waveforms between different channels.

Step 302: The encoding apparatus encodes the first pulse signal to obtain a hidden variable.

For example, the encoding apparatus may encode the first pulse signal based on an encoder. A process in which the encoder encodes the first pulse signal may be understood as a dimension reduction process, that is, the encoder encodes a high-dimensional first pulse signal into a low-dimensional hidden variable. The hidden variable represents a feature of the first pulse signal. In an example, the hidden variable may represent a waveform feature of the first pulse signal.

In an example, the first pulse signal may be encoded based on a principle of an auto-encoder (auto-encoder). The auto-encoder includes an encoder and a decoder. The encoder encodes a high-dimensional first pulse signal into a low-dimensional hidden variable, and the decoder may reconstruct (reconstruct) or restore a reconstructed first pulse signal based on the low-dimensional hidden variable.

Step 303: The encoding apparatus quantizes the hidden variable, and performs index encoding on a quantized hidden variable to obtain a vector index of the first pulse signal, where the vector index is used by a decoding apparatus to reconstruct the first pulse signal with reference to the hidden variable.

For example, the encoding apparatus may convert continuous compressed vectors into discrete compressed vectors, but a quantization error is also introduced. Different types of neurons correspond to different ion channel types and density, and different types of ion channels have different dynamic characteristics. Therefore, pulse signals have natural variability (variability). However, the pulse signals have second-order smoothness, and a smoothing error is introduced based on smoothing prior. Therefore, an error of the encoding method provided in this embodiment of this application is a sum of a quantization error and a smoothing error. Noise robustness and explainability of the hidden variable may be improved by introducing a second-order smoothing constraint into the encoding apparatus.

FIG. 4 is a diagram of waveforms of a plurality of quantized hidden variables according to an embodiment of this application. FIG. 4 shows waveforms of eight quantized hidden variables, for example, (a) to (h) in FIG. 4. A vector index may be generated for each quantized hidden variable. For example, binary encoding is performed starting from 0 based on a quantity of quantized hidden variables. In an example, if there are 128 quantized hidden variables, at least 7-bit binary encoding needs to be performed on vector indexes.

The quantized hidden variable may be obtained in an algorithm training phase. Motion artifacts are superimposed in an input first pulse signal, and the algorithm may be used to reconstruct, through training, a pulse signal obtained through motion artifact noise reduction, to remove the motion artifacts. If the first pulse signal does not include the motion artifacts, the algorithm may be used to reconstruct the pulse signal through training, to further improve a compression rate.

Step 304: The encoding apparatus sends the vector index to the decoding apparatus.

For example, the encoding apparatus may send the vector index to the decoding apparatus through wireless Bluetooth or wireless fidelity (wireless fidelity, Wi-Fi). Compared with the first pulse signal, the vector index reduces an amount of data transmitted by the pulse signal, and therefore can meet a wireless transmission bandwidth requirement.

In another implementation, the encoding apparatus may alternatively send the vector index to the decoding apparatus through wired transmission.

Therefore, compared with the conventional technology in which the encoded and quantized first pulse signal is sent to the decoding apparatus, in the encoding method provided in this embodiment of this application, an amount of data that needs to be transmitted to the decoding apparatus is reduced. This resolves a problem of pulse signal transmission in a high-throughput and low-bandwidth scenario.

Optionally, before step 304, the encoding may further include: The encoding apparatus performs lossless encoding on the vector index.

In an example, the encoding apparatus may directly transmit an original vector index to the encoding apparatus. In another example, the encoding apparatus may alternatively perform entropy encoding on the vector index. The entropy encoding is encoding in which no information is lost according to an entropy principle in an encoding process. The entropy encoding may include Shannon (Shannon) encoding, Huffman (Huffman) encoding, arithmetic encoding (arithmetic coding), and the like. Lossless encoding is performed on the vector index, so that the amount of data sent by the encoding apparatus to the decoding apparatus may be further reduced.

Optionally, the first pulse signal is an electroencephalogram signal.

For example, in a brain-machine interface technology, a data collection device detects a cortical electrical activity of a brain, and then a collected electrical signal is converted into a signal for controlling an external device. There are mainly two collection manners of the data collection device. One is an invasive manner with a built-in electrode, and the other is a non-invasive manner with an external electrode. An intrusive brain-machine interface chip uses the invasive manner with the built-in electrode. The electrode may be a silicon-based electrode, a flexible electrode, or the like. In this manner, the electrode is implanted into a cerebral cortex of a tested person through surgery, and is directly in contact with the cerebral cortex. Therefore, an electroencephalogram signal collected in this manner is more accurate. In addition, in the non-invasive manner with the external electrode, an apparatus is worn on the head of a tested person to collect a signal. This manner is easy to operate and has low costs. However, a collected electroencephalogram signal has very low intensity, and usually cannot meet a requirement. The collected electroencephalogram signal needs to be amplified through another apparatus.

Because an electroencephalogram signal is generated under joint action of a plurality of neural cells, the electroencephalogram signal has the following characteristics: (1) extremely low signal intensity, weak anti-interference capability, and prone to fluctuation in different environments; (2) nonlinearity and non-stationarity, and type diversity; and (3) synthetic wave. Therefore, using built-in electrodes to collect electroencephalogram signal can improve accuracy of collection of the electroencephalogram signals.

In addition, when the first pulse signal is obtained, the tested person may be in a stationary state or a motion state.

Optionally, step 302 may include: The encoding apparatus compresses the first pulse signal into hidden space based on a convolutional neural network, to obtain the hidden variable.

For example, the convolutional neural network may be a deep residual network (deep residual network, ResNet) architecture, or the convolutional neural network may be a combination of a deep residual network and an inception (inception), that is, a ResNeXt architecture. The convolutional neural network may include an input layer, a plurality of convolutional layers, a neural network layer, and the like.

In an example, the encoding apparatus may perform feature extraction on the first pulse signal based on the convolutional layer, and decompose the first pulse signal into a compressed vector (compressed vector). Further, for on-chip power consumption and storage limitations, a group convolution (group convolution) architecture in the deep residual network is used, and a feature of the first pulse signal is effectively extracted through a skip connection (skip connection), to obtain continuous hidden variables. In addition, a quantity of parameters may be further reduced.

The hidden variable may be high-precision. Specifically, the hidden variable may be represented by floating point (floating point, FP) data 64.

Optionally, step 303 may include: The encoding apparatus quantizes the hidden variable based on a competitive learning mechanism.

For example, the competitive learning mechanism may be a method, for example, vector quantization and a self-organizing map (self-organizing map, SOM). The vector quantization is to divide high-dimensional input space into several different regions, and determine a center vector for each region as a clustering center, where an input vector in a same region as the center vector may be represented by the center vector. In this case, a point set with each center vector as a clustering center is formed. The self-organizing map is an important type of neural network based on an unsupervised learning method. A self-organizing map network is used to classify an input pattern set by searching for an optimal reference vector set. A formed clustering center can be mapped to a curved surface or a plane, and a topology structure remains unchanged. The self-organizing map may be used to convert an input signal of any dimension into one-dimensional or two-dimensional discrete mapping.

For example, a process in which the encoding apparatus quantizes the hidden variable may be understood as a discrete process. The encoding apparatus converts continuous hidden variables into a plurality of discrete quantized hidden variables. In an example, it is assumed that a quantity of continuous hidden variables is 16, and 128 discrete quantized hidden variables may be obtained.

Optionally, before step 301, the method may include: The encoding apparatus obtains the first pulse signal based on a comparison result between spectral energy corresponding to a second pulse signal and a preset threshold.

For example, before the first pulse signal is encoded, a noise signal in the second pulse signal should be further removed. In an example, the noise signal in the second pulse signal may be removed in an adaptive threshold denoising manner. First, Fourier transform is performed on the second pulse signal to obtain a spectrum, and the spectral energy of the second pulse signal is obtained based on the spectrum. Then, the spectral energy is compared with the preset threshold. If the spectral energy is greater than the preset threshold, the signal corresponding to the spectral energy is reserved, to obtain the first pulse signal. If the spectral energy is less than the preset threshold, the signal corresponding to the spectral energy may be understood as noise, and the signal corresponding to the spectral energy is removed. In addition, after performing denoising processing on the second pulse signal, the encoding apparatus detects a pulse sending time point and extracts corresponding waveform information to obtain the first pulse signal.

In addition, before denoising processing is performed on the second pulse signal, filtering processing may be further performed on the second pulse signal to remove other non-pulse signals such as a local field potential of the second pulse signal. A filtering manner may be low-pass filtering, high-pass filtering, band-pass filtering, or another filtering method. This is not limited in this application.

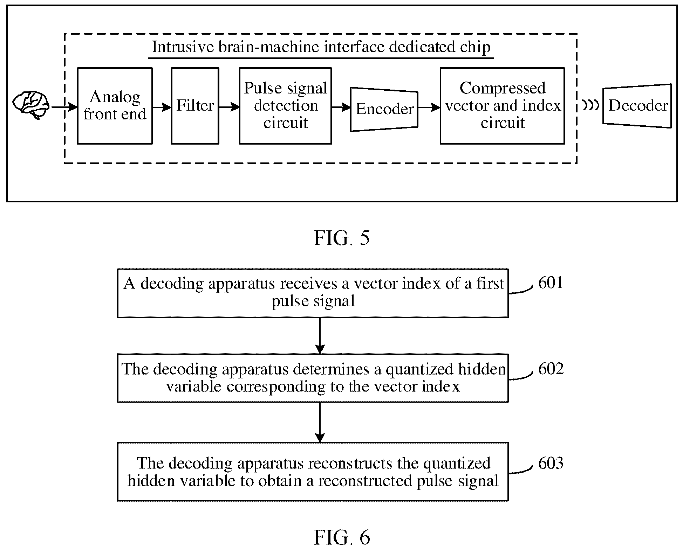

Based on the foregoing descriptions, the following describes an encoding apparatus to which an encoding method is applied in embodiments of this application. Specifically, FIG. 5 shows a low-power-consumption intrusive brain-machine interface dedicated chip having a wireless transmission function. The intrusive brain-machine interface dedicated chip includes an analog front end (analog front end, AFE), a filter (filter), a spike detection (spike detection) circuit, an encoder (encoder), and a compressed vector and index (compressed vector and index) circuit. The intrusive brain-machine interface chip collects an electroencephalogram signal using a data collection device. The analog front end is configured to convert the collected analog signal into a digital signal. The filter is configured to perform band-pass filtering on the digital signal based on a pulse firing frequency (for example, 300 Hz to 3000 Hz). The spike detection circuit is configured to perform pulse firing point detection based on an adaptive threshold. The encoder is configured to perform feature extraction based on a convolutional layer and skip connection (skip connection), and is designed for a lightweight network structure for on-chip power consumption and storage limitations. The compressed vector and index circuit is configured to convert continuous hidden variables into discrete hidden variables through vector quantization, and perform index encoding on the discrete hidden variables. After processing of the electroencephalogram signal is completed on the intrusive brain-machine interface dedicated chip, an index is transmitted to a decoder of a lower computer, to complete wireless transmission of the electroencephalogram signal. In an example, the encoder and a compressed vector and index module in the intrusive brain-machine interface chip may be implemented on chip using a logic circuit or a digital signal processing module.

The method is applied to the foregoing apparatus or device. The following describes the decoding method provided in embodiments of this application.

An embodiment of this application provides a decoding method. FIG. 6 is a flowchart of a decoding method according to an embodiment of this application. The decoding method includes the following procedure.

Step 601: A decoding apparatus receives a vector index of a first pulse signal.

For example, the decoding apparatus may receive, in a wireless Bluetooth or wireless fidelity manner, the vector index sent by an encoding apparatus. In an example, there is a correspondence between the vector index and a quantized hidden variable, and the correspondence may be stored in a table. It may be understood that the table is stored in both the decoding apparatus and the encoding apparatus.

Step 602: The decoding apparatus determines a quantized hidden variable corresponding to the vector index.

For example, the vector index and the quantized hidden variable are combined, and the quantized hidden variable corresponding to the vector index may be determined by looking up a table.

Step 603: The decoding apparatus reconstructs the quantized hidden variable to obtain a reconstructed pulse signal.

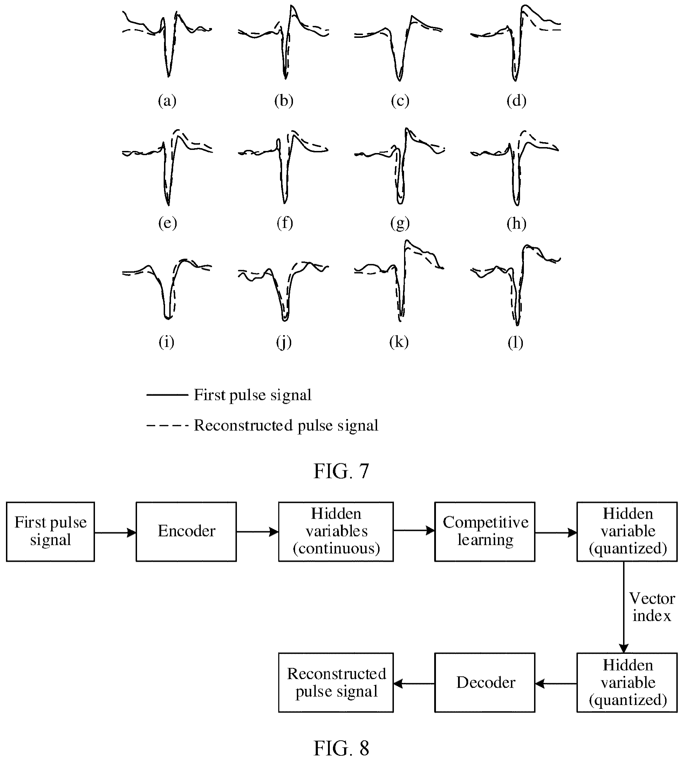

For example, FIG. 7 is a diagram of comparison between a first pulse signal and a reconstructed pulse signal according to an embodiment of this application. FIG. 7 shows the diagram of comparison between 12 types of first pulse signals and reconstructed pulse signals, for example, (a) to (l) in FIG. 7. It can be learned from FIG. 7 that a waveform of the reconstructed pulse signal is approximately the same as a waveform of the first pulse signal. Therefore, a reconstruction error of the reconstructed pulse signal obtained in this embodiment of this application is low. In addition, in a training process of an original pulse waveform, motion artifacts have been removed, so that the reconstructed pulse signal does not include the motion artifacts.

In addition, with reference to the encoding method, an overall error of the encoding method and the decoding method provided in embodiments of this application is a sum of a quantization error, a smoothing error, and a reconstruction error.

Optionally, before step 601, the decoding method may include: The decoding apparatus performs lossless decoding on the vector index.

For example, if the vector index received by the decoding apparatus is an original vector index, the vector index does not need to be decoded. If the vector index received by the decoding apparatus is a vector index used by the encoding apparatus to perform lossless encoding, lossless decoding needs to be performed on the vector index. Information may be not lost if the vector index is encoded in the lossless encoding manner, and an amount of data that needs to be transmitted by the encoding apparatus to the decoding apparatus may be further reduced.

Optionally, step 603 may include: The decoding apparatus calculates, based on a convolutional neural network, a loss function corresponding to the quantized hidden variable, and reconstructs the quantized hidden variable based on the loss function to obtain a reconstructed pulse signal.

For example, a convolutional neural network on a decoding apparatus side may alternatively be a deep residual network structure, or may be a ResNeXt architecture. The loss function indicates a degree of inconsistency between the reconstructed pulse signal and the first pulse signal. In a training phase, a loss function corresponding to the quantized hidden variable may be obtained. The quantized hidden variable is reconstructed based on the loss function. This may reduce the reconstruction error of the reconstructed pulse signal.

Optionally, the first pulse signal and the reconstructed pulse signal are electroencephalogram signals.

For example, the first pulse signal may be an intrusive electroencephalogram signal collected through an intrusive brain-machine interface chip, and an electroencephalogram signal is collected through a built-in electrode, so that accuracy of collecting the electroencephalogram signal can be improved. The reconstructed pulse signal is reconstructed based on the first pulse signal, and is a first pulse signal that can be analyzed and processed.

The method is applied to the foregoing encoding method, decoding method, encoding apparatus, and decoding apparatus. FIG. 8 is a diagram of an encoding procedure and a decoding procedure according to an embodiment of this application. The diagram shows only some actions of an encoding apparatus and some actions of a decoding apparatus. At an encoding apparatus end, an encoder encodes a first pulse signal to obtain continuous hidden variables, quantizes the continuous hidden variables by using a competitive learning mechanism to obtain quantized hidden variables, and sends a vector index to the decoding apparatus. At a decoding apparatus end, the vector index sent by the encoding apparatus is received, the vector index is combined with the quantized hidden variable, and a reconstructed pulse signal is obtained through a decoder. In this way, a transmission process of the first pulse signal is completed.

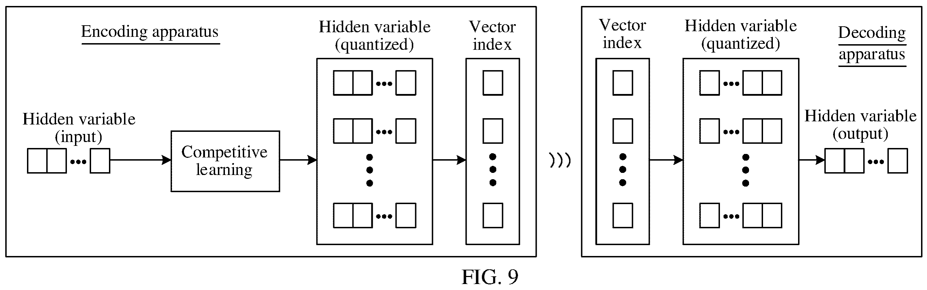

Specifically, a diagram of an architecture of hidden variable quantization is shown in FIG. 9. At an encoding apparatus end, continuous hidden variables are used as an input, and the continuous hidden variables are quantized into discrete hidden variables by using a competitive learning mechanism. Index encoding is performed on the discrete hidden variables to obtain vector indexes corresponding to the discrete hidden variables, and the vector indexes are sent to a decoding apparatus. At a decoding apparatus end, the vector index sent by the encoding apparatus is received, the vector index and the quantized hidden variable are combined to obtain continuous hidden variables, and the continuous hidden variables are used as an output.

Assuming that a sampling rate is 20 kHz, a data length L is 100, a quantity M of channels read at a time is 8, the hidden variable N is 16, the quantized hidden variable C is 128, signal precision B is 12 bits, and a bandwidth required for compression and transmission of a 1024-channel pulse signal is 2.87 Mbps, a signal compression rate is 85.7 times.

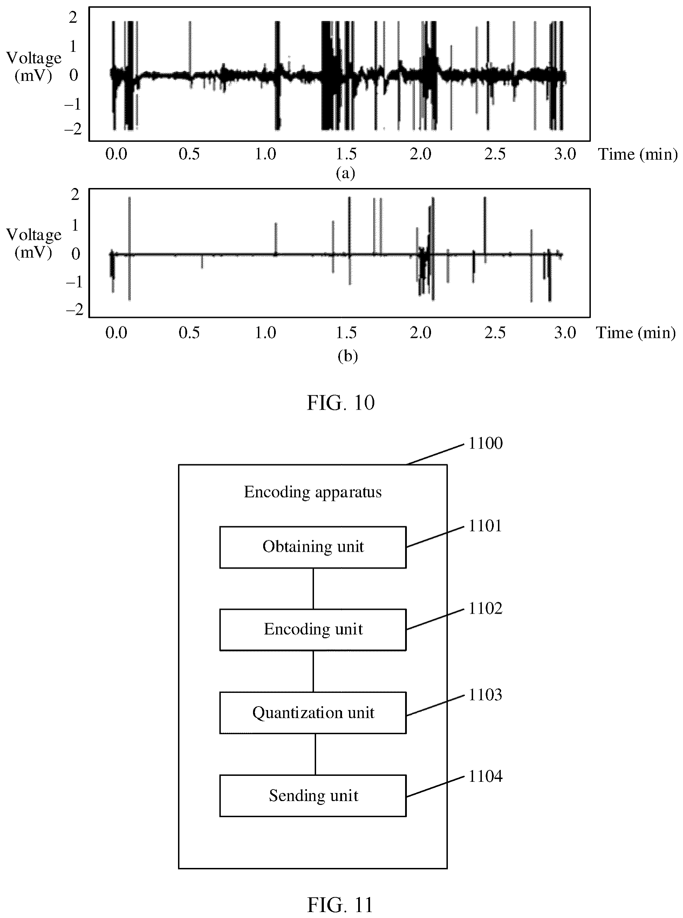

The method is applied to the foregoing encoding method and decoding method. An example in which the quantity of channels read at a time is 10 and the data length is 180s is used. A diagram of a motion artifact noise reduction effect is shown in FIG. 10. (a) in FIG. 10 is an effect diagram of motion artifacts before noise reduction, and (b) in FIG. 10 is an effect diagram of motion artifacts after noise reduction. It can be clearly learned from FIG. 10 that, according to the encoding method and the decoding method provided in embodiments of this application, motion artifacts greatly different from a feature of a first pulse signal can be effectively identified.

It may be understood that, to implement the foregoing functions, an electronic device includes hardware and/or software modules for performing corresponding functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraint conditions of the technical solutions. A person skilled in the art may use different methods to implement the described functions for each particular application with reference to embodiments, but it should not be considered that the implementation goes beyond the scope of this application.

In embodiments, the electronic device may be divided into functional modules based on the foregoing method examples. For example, functional modules may be obtained through division based on corresponding functions, or two or more functions may be integrated into one processing module. The integrated module may be implemented in a form of hardware. It should be noted that module division in embodiments is an example and is merely logical function division. In an actual implementation, there may be another division manner.

When functional modules are obtained through division based on corresponding functions, FIG. 11 is a possible diagram of composition of an encoding apparatus 1100 in the foregoing embodiment. As shown in FIG. 11, the encoding apparatus 1100 may include an obtaining unit 1101, an encoding unit 1102, a quantization unit 1103, and a sending unit 1104.

The obtaining unit 1101 may be configured to support the encoding apparatus 1100 in performing the foregoing step 301 and the like, and/or another process of the technology described in this specification.

The encoding unit 1102 may be configured to support the encoding apparatus 1100 in performing the foregoing step 302 and the like, and/or another process of the technology described in this specification.

The quantization unit 1103 may be configured to support the encoding apparatus 1100 in performing the foregoing step 303 and the like, and/or another process of the technology described in this specification.

The sending unit 1104 may be configured to support the encoding apparatus 1100 in performing the foregoing step 304 and the like, and/or another process of the technology described in this specification.

It should be noted that all related content of the steps in the foregoing method embodiments may be cited in function descriptions of corresponding functional modules. Details are not described herein again.

The encoding apparatus 1100 provided in this embodiment is configured to perform the foregoing encoding method, and therefore, an effect the same as that of the foregoing implementation method can be achieved.

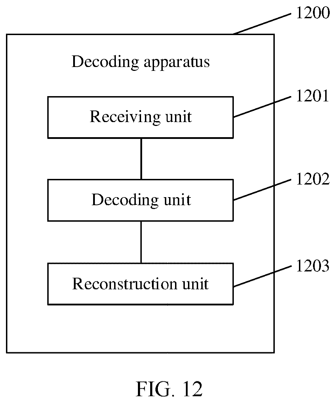

When functional modules are obtained through division based on corresponding functions, FIG. 12 is a possible diagram of composition of a decoding apparatus 1200 in the foregoing embodiment. As shown in FIG. 12, the decoding apparatus 1200 may include a receiving unit 1201, a decoding unit 1202, and a reconstruction unit 1203.

The receiving unit 1201 may be configured to support the decoding apparatus 1200 in performing the foregoing step 601 and the like, and/or another process of the technology described in this specification.

The decoding unit 1202 may be configured to support the decoding apparatus 1200 in performing the foregoing step 602 and the like, and/or another process of the technology described in this specification.

The reconstruction unit 1203 may be configured to support the decoding apparatus 1200 in performing the foregoing step 603 and the like, and/or another process of the technology described in this specification.

It should be noted that all related content of the steps in the foregoing method embodiments may be cited in function descriptions of corresponding functional modules. Details are not described herein again.

The decoding apparatus 1200 provided in this embodiment is configured to perform the foregoing decoding method, and therefore, an effect the same as that of the foregoing implementation method can be achieved.

When an integrated unit is used, the encoding apparatus 1100 may include a processing module, a storage module, and a communication module. The processing module may be configured to control and manage an action of the encoding apparatus 1100. For example, the processing module may be configured to support the encoding apparatus 1100 in performing the steps performed by the obtaining unit 1101, the encoding unit 1102, the quantization unit 1103, and the sending unit 1104. The storage module may be configured to support the encoding apparatus 1100 in storing program code, data, and the like. The communication module may be configured to support the encoding apparatus 1100 in communicating with another device, for example, communicating with a wireless access device.

When an integrated unit is used, the decoding apparatus 1200 may include a processing module, a storage module, and a communication module. The processing module may be configured to control and manage an action of the decoding apparatus 1200. For example, the processing module may be configured to support the decoding apparatus 1200 in performing the steps performed by the receiving unit 1201, the decoding unit 1202, and the reconstruction unit 1203. The storage module may be configured to support the decoding apparatus 1200 in storing program code, data, and the like. The communication module may be configured to support the decoding apparatus 1200 in communicating with another device, for example, communicating with a wireless access device.

The processing module may be a processor or a controller, and may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor, and the storage module is a memory, the electronic device in this embodiment may be an intrusive brain-machine interface dedicated chip having the structure shown in FIG. 5.

An embodiment of this application further provides an electronic device, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the foregoing related method steps, to implement the encoding method or the decoding method in the foregoing embodiments.

An embodiment of this application further provides a computer storage medium. The computer storage medium stores computer instructions. When the computer instructions are run on an electronic device, the electronic device is enabled to perform the foregoing related method steps, to implement the encoding method or the decoding method in the foregoing embodiments.

An embodiment of this application further provides a computer program product. When the computer program product runs on a computer, the computer is enabled to perform the foregoing related steps, to implement the encoding method or the decoding method performed by the electronic device in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the encoding method or the decoding method performed by the electronic device in the foregoing method embodiments.

The electronic device, the computer storage medium, the computer program product, or the chip provided in embodiments is configured to perform a corresponding method provided above. Therefore, for beneficial effects that can be achieved by the electronic device, the computer storage medium, the computer program product, or the chip, refer to the beneficial effects in the corresponding method provided above. Details are not described herein again.

Based on descriptions of the foregoing implementations, a person skilled in the art may understand that, for convenience and brevity of description, division into the foregoing functional modules is merely used as an example for description. During actual application, the foregoing functions may be allocated to different functional modules for implementation based on a requirement. In other words, an inner structure of an apparatus is divided into different functional modules to implement all or some of the functions described above.

In the several embodiments provided in this application, it should be understood that the disclosed apparatus and method may be implemented in other manners. For example, the apparatus embodiment described above is merely an example. For example, division into the modules or units is merely logical function division, and may be other division in an actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate parts may or may not be physically separate, and parts displayed as units may be one or more physical units, may be located in one place, or may be distributed in different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The integrated unit may be stored in a readable storage medium when being implemented in the form of the software functional unit and sold or used as an independent product. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An encoding method, wherein the method comprises:
obtaining a first pulse signal;
encoding the first pulse signal to obtain a hidden variable;
quantizing the hidden variable, and performing index encoding on a quantized hidden variable to obtain a vector index of the first pulse signal, wherein the vector index is used by a decoding apparatus to reconstruct the first pulse signal with reference to the hidden variable; and
sending the vector index to the decoding apparatus.

2. The method according to claim 1, wherein before sending the vector index to the decoding apparatus, the method further comprises:
performing lossless encoding on the vector index.

3. The method according to claim 1 or 2, wherein the first pulse signal is an electroencephalogram signal.

4. The method according to claim 1, wherein the encoding the first pulse signal to obtain a hidden variable comprises:
compressing the first pulse signal into hidden space based on a convolutional neural network, to obtain the hidden variable.

5. The method according to claim 1, wherein the quantizing the hidden variable comprises:
quantizing the hidden variable based on a competitive learning mechanism.

6. The method according to claim 1, wherein before the obtaining a first pulse signal, the method further comprises:
obtaining the first pulse signal based on a comparison result between spectral energy corresponding to a second pulse signal and a preset threshold.

7. A decoding method, wherein the method comprises:
receiving a vector index of a first pulse signal;
determining a quantized hidden variable corresponding to the vector index; and
reconstructing the quantized hidden variable to obtain a reconstructed pulse signal.

8. The method according to claim 7, wherein after receiving the vector index of the first pulse signal, the method further comprises:
performing lossless decoding on the vector index.

9. The method according to claim 7, wherein the reconstructing the quantized hidden variable to obtain a reconstructed pulse signal comprises:
calculating, based on a convolutional neural network, a loss function corresponding to the quantized hidden variable; and
reconstructing the quantized hidden variable based on the loss function to obtain a reconstructed pulse signal.

10. The method according to claim 9, wherein the first pulse signal and the reconstructed pulse signal are electroencephalogram signals.

11. An encoding apparatus, wherein the encoding apparatus comprises an encoder and a compressed vector discretization circuit;
the encoder is configured to obtain a first pulse signal;
the encoder is further configured to encode the first pulse signal to obtain a hidden variable;
the compressed vector discretization circuit is configured to: quantize the hidden variable, and perform index encoding on a quantized hidden variable to obtain a vector index of the first pulse signal, wherein the vector index is used by a decoding apparatus to reconstruct the first pulse signal with reference to the hidden variable; and
the compressed vector discretization circuit is further configured to send the vector index to the decoding apparatus.

12. The encoding apparatus according to claim 11, wherein
the encoder is further configured to perform lossless encoding on the vector index.

13. The encoding apparatus according to claim 11 or 12, wherein the first pulse signal is an electroencephalogram signal.

14. The encoding apparatus according to claim 11, wherein the encoder is specifically configured to:
compress the first pulse signal into hidden space based on a convolutional neural network, to obtain the hidden variable.

15. The encoding apparatus according to claim 11, wherein the compressed vector discretization circuit is specifically configured to:
quantize the hidden variable based on a competitive learning mechanism.

16. The encoding apparatus according to claim 11, wherein the encoding apparatus further comprises a signal detection circuit; and
the signal detection circuit is configured to obtain the first pulse signal based on a comparison result between spectral energy corresponding to a second pulse signal and a preset threshold.

17. A decoding apparatus, wherein the decoding apparatus comprises a decoder and a reconstruction circuit;
the decoder is configured to receive a vector index of a first pulse signal;
the decoder is further configured to determine a quantized hidden variable corresponding to the vector index; and
the reconstruction circuit is configured to reconstruct the quantized hidden variable to obtain a reconstructed pulse signal.

18. The decoding apparatus according to claim 17, wherein
the decoder is further configured to perform lossless decoding on the vector index.

19. The decoding apparatus according to claim 18, wherein the reconstruction circuit is specifically configured to:
calculate, based on a convolutional neural network, a loss function corresponding to the quantized hidden variable; and
reconstruct the quantized hidden variable based on the loss function to obtain a reconstructed pulse signal.

20. The decoding apparatus according to claim 19, wherein the first pulse signal and the reconstructed pulse signal are electroencephalogram signals.

21. An encoding apparatus, comprising a processor and a memory, wherein the memory stores computer instructions, and after executing the computer instructions, the processor performs the method according to any one of claims 1 to 6.

22. A decoding apparatus, comprising a processor and a memory, wherein the memory stores computer instructions, and after executing the computer instructions, the processor performs the method according to any one of claims 7 to 10.

23. A computer-readable storage medium, comprising computer instructions, wherein when the computer instructions are run on an electronic device, the electronic device is enabled to perform the method according to any one of claims 1 to 6, or the electronic device is enabled to perform the method according to any one of claims 7 to 10.
